Europäisches Patentamt

**European Patent Office**

**Office européen des brevets**

(11) Numéro de publication: **0 079 815**
**A2**

## (12) DEMANDE DE BREVET EUROPEEN

(21) Numéro de dépôt: **82402006.9**

(22) Date de dépôt: **29.10.82**

(51) Int. Cl.³: **A 01 M 7/00**
**F 16 K 31/52**

(30) Priorité: **12.11.81 FR 8121141**
**24.06.82 FR 8211062**

(43) Date de publication de la demande:
**25.05.83 Bulletin 83/21**

(84) Etats contractants désignés:
**AT BE CH DE FR GB IT LI LU NL SE**

(71) Demandeur: **TECNOMA**
**54 rue de l'Electricité**
**F-51206 Epernay(FR)**

(72) Inventeur: **Ballu, Patrick Jean-Marie**
**4, Rue de l'Isle**
**F-51100 Reims(FR)**

(74) Mandataire: **De Boisse, Louis**
**37, Avenue Franklin D. Roosevelt**
**F-75008 Paris(FR)**

(54) **Distributeur rotatif, notamment pour une installation mobile de pulvérisation d'un liquide de traitement des plantes.**

㊇ L'invention concerne un distributeur rotatif pour distribuer un liquide entre des rampes de pulvérisation.

Ce distributeur comprend une chambre (7), qui est alimentée en liquide par la pompe et où débouchent des clapets tels que (10b, 10d), contrôlant l'alimentation des diverses rampes ; ces clapets sont commandés par des saillies radiales (17a) d'un disque rotatif (16), traversé par des lumières susceptibles de démasquer des lumières d'une cloison (3), séparant la chambre (7) d'une chambre de retour (8) ; des moyens sont prévus pour contrôler la section de deux lumières coïncidentes afin de régler le débit du liquide envoyé vers les rampes.

L'invention est applicable notamment aux installations mobiles pour pulvériser un liquide de traitement des plantes.

FIG.: 3

EP 0 079 815 A2

- 1 -

<u>Distributeur rotatif, notamment pour une installation mo-
bile de pulvérisation d'un liquide de traitement des plantes.</u>

La présente invention concerne un distributeur rotatif,
notamment pour faire alimenter à volonté une ou plusieurs
sections de rampe d'une installation mobile de pulvérisation d'un liquide de traitement des plantes, par la pompe
volumétrique de l'installation, qui est entraînée par la
prise de force du tracteur.

On connaît déjà un distributeur rotatif pour cette application, comportant une chambre de pression, qui est raccordée au refoulement de la pompe, et dans laquelle est
monté rotatif un disque, muni sur son bord de cames pour
commander, dans des positions angulaires déterminées du
disque, l'ouverture ou la fermeture de clapets, montés
aux entrées respectives de tubulures, destinées au raccordement de ladite chambre de pression avec les différentes sections de rampe. Bien entendu, à ce distributeur rotatif doit être associé un dispositif de régulation du débit, par exemple du type fonctionnant à pression constante, ou encore du type permettant d'obtenir un débit proportionnel à l'avancement de l'installation mobile de pulvérisation.

La présente invention concerne un perfectionnement du distributeur rotatif du type connu, qui vient d'être indiqué, perfectionnement grâce auquel le débit des sections de rampe peut être ajusté au niveau du distributeur rotatif lui-même, sans qu'il soit nécessaire à cet effet d'un dispositif supplémentaire de régulation du débit.

Le distributeur rotatif selon la présente invention est du type qui vient d'être indiqué, et il est caractérisé en ce qu'au moins une première lumière de retour traverse une cloison qui sépare la chambre de pression d'une chambre de retour, raccordée au réservoir de liquide, et que, dans le but de permettre d'ajuster le débit d'alimentation des sections de rampe, de manière qu'il soit toujours proportionnel au régime de la prise de force du tracteur, donc à sa vitesse de déplacement pour un rapport déterminé de sa boîte de vitesses, des moyens sont prévus pour régler, de l'extérieur du distributeur, par exemple manuellement, la section de ladite première lumière de retour aménagée dans la cloison de séparation.

Dans une première forme de réalisation de l'invention le disque rotatif est pourvu de premières lumières pour, selon sa position angulaire, masquer ou démasquer la première lumière de retour.

Grâce à ces caractéristiques du distributeur rotatif selon la présente invention, chaque fois que son disque rotatif se trouve dans une position angulaire déterminée, pour laquelle il y a coïncidence des premières lumières aménagées respectivement dans la cloison de séparation et dans le disque, une fraction du courant de liquide envoyé par la pompe de l'installation dans la chambre de pression du distributeur est dérivée vers sa chambre de retour, à travers lesdites premières lumières, tandis que le reste du liquide est distribué à un certain nombre des sections de rampe de l'installation de pulvérisation, selon celle des positions angulaires déterminées qui a été donnée au disque rotatif; les moyens dont est pourvu le distributeur rotatif selon la présente invention, pour régler la section des premières lumières coïncidentes, permettent donc d'ajuster la fraction du courant total de liquide envoyé dans le distributeur par la pompe, qui est dérivée vers sa chambre de retour et le réservoir de l'installation, donc, par suite, de régler le débit total de liquide envoyé aux rampes de pulvérisation. Comme l'installation de pulvérisation est alimentée par une pompe volumétrique, son mode de fonctionnement est tel que le débit de pulvérisation est toujours proportionnel au régime de la pompe, donc au régime de la prise de force du tracteur, et, par suite, au régime de son moteur et, donc, à sa vitesse de déplacement pour un rapport déterminé de sa boîte de vitesses. Ceci assure la pulvérisation d'un volume constant de liquide de traitement par hectare, indépendamment des variations éventuelles de la vitesse de déplacement du tracteur.

Le distributeur rotatif selon la présente invention est utilisable quel que soit le nombre N de sections de rampe que comporte l'installation mobile de pulvérisation, et qui sont susceptibles d'être alimentées séparément les unes des autres; ce distributeur rotatif offre notamment l'avantage de permettre de mettre en service, à volonté, soit une unique section de rampe quelconque, soit l'ensemble des N sections de rampe, soit une combinaison quelconque de J sections de rampe, J étant un entier compris entre 1 et N. Il suffit pour cela que le distributeur rotatif comporte un nombre suffisant de positions angulaires déterminées, à chacune desquelles on affectera, pour faciliter les explications ultérieures, un indice numérique J = 1,2... ou N selon qu'elle correspond à l'alimentation simultanée de 1,2... ou N sections de rampe, identiques entre elles.

Selon une autre caractéristique avantageuse, mais facultative, du distributeur rotatif suivant la présente invention, il comporte en outre, pour maintenir une pression constante dans la chambre de pression———————————————

pour toutes les positions angulaires déterminées d'indices 1 à N, un groupe de (N-1) secondes lumières, aménagées dans la cloison de séparation, des moyens pour obturer toutes les secondes lumières dans la position angulaire d'indice J = N, et des moyens pour dégager seulement (N-J) des (N-1) secondes lumières lorsque le disque rotatif est dans la position angulaire correspondante, d'indice J différent de N.

Dans une réalisation particulièrement simple les moyens pour obturer les secondes lumières, aménagées dans la cloison de séparation, sont constitués par le disque rotatif lui-même, et les moyens pour les dégager sont formés en aménageant dans le disque, pour chacune des positions angulaires d'indice J différent de N, un groupe de (N-J) secondes lumières, convenablement disposées.

Dans ce cas, lorsque le disque rotatif est dans une position angulaire déterminée, d'indice J (il peut y en avoir plusieurs , correspondant respectivement à des combinaisons différentes comportant chacune un même nombre, J, de sections de rampe), la totalité du liquide envoyé dans le distributeur rotatif par la pompe de l'installation se divise en une première fraction qui passe dans la chambre de retour par les premières lumières coïncidentes, une seconde fraction qui passe également dans la chambre de retour par (N - J) secondes lumières coïncidentes, et une troisième fraction qui alimente J sections de rampe; on comprend qu'il est possible de choisir les sections des secondes lumières, et de les régler à l'aide des moyens prévus à cet effet de telle façon que la somme de la seconde et de la troisième fraction soit indépendante de l'indice J, c'est-à-dire de la position angulaire déterminée dans laquelle se trouve le distributeur rotatif; il suffit notamment pour cela que le débit, $q$, de chaque paire de secondes lumières coïncidentes soit ajusté pour être égal au débit de chaque section de rampe, tel qu'il a été ajusté au niveau des premières lumières coïncidentes, comme précédemment indiqué; dans ce cas, en effet, la somme des débits $(N - J)q$ des secondes lumières coïncidentes et des débits $J \cdot q$ des $J$ sections de rampe a une valeur, $N.q$, indépendante de l'indice $J$, et par suite de la position du distributeur rotatif. Il en résulte évidemment que la pression régnant dans la chambre de pression, c'est-à-dire la pression de pulvérisation au niveau des sections de rampe en service, est indépendante du nombre $J$ de ces dernières, et par suite de la position du distributeur rotatif.

Dans une forme de réalisation préférée de l'invention, les moyens de réglage des sections des premières et des secondes lumières comprennent respectivement un premier et un second obturateurs, mobiles respectivement dans les zones desdites premières et secondes lumières de la cloison de séparation. Le premier obturateur est ajusté, par exemple manuellement, de l'extérieur du distributeur, de manière à régler le débit des sections de rampe de pulvérisation. Le second obturateur est ajusté de la même façon,de manière à régler à une valeur choisie la pression régnant dans la chambre de pression du distributeur, notamment en s'aidant d'un manomètre branché sur cette chambre de pression.

Selon une autre caractéristique avantageuse du distributeur rotatif suivant la présente invention, des troisièmes lumières sont aménagées dans la cloison de séparation et le disque rotatif de façon à coïncider pour toutes les positions angulaires du disque, intermédiaires entre ses positions déterminées.

Grâce à cette disposition, la différence entre les pressions régnant respectivement dans la chambre de pression et dans la chambre de retour est très faible lorsque le disque rotatif est dans une position intermédiaire quelconque, si bien qu'aucune force de pression ne s'ajoute pratiquement aux forces que les ressorts de rappel exercent sur les corps des clapets montés aux entrées respectives des tubulures destinées au raccordement de la chambre de pression avec les différentes sections de rampe; par suite, lorsque l'on fait tourner le disque depuis une telle position intermédiaire jusqu'à la position angulaire déterminée la plus proche, et que certaines de ses cames agissent sur certains des corps de clapet en surmontant les forces des ressorts correspondants, le couple qui doit être exercé manuellement sur le disque rotatif pour l'amener dans ladite position angulaire déterminée est faible, puisqu'il n'a qu'à surmonter les forces exercées par les ressorts de rappel sur lesdits corps de clapets. La manoeuvre du distributeur rotatif selon la présente invention est ainsi beaucoup plus aisée et demande beaucoup moins d'efforts manuels que celle du distributeur rotatif connu, dans lequel une pression importante est maintenue dans la chambre de pression en permanence, y compris lorsque le disque rotatif se trouve dans ses positions intermédiaires.

Dans une autre forme de réalisation de l'invention, un clapet à bille et à ressort est aménagé dans la chambre de pression de manière à obturer la première lumière de retour dans l'une au moins des positions angulaires déterminées du disque rotatif, ledit clapet étant ouvert dans toutes les autres positions déterminées du disque rotatif, par des secondes cames, solidaires en rotation de ce disque.

Selon une autre caractéristique avantageuse de cette autre forme de réalisation de l'invention, les moyens de réglage de la section de la première lumière de retour forment avec elle un robinet à pointeau, qui peut être manoeuvré manuellement de l'extérieur du distributeur. De préférence, la première lumière comporte deux sièges, l'un dans la chambre de pression, pour coopérer avec la bille du clapet, et l'autre siège, dans la chambre de retour, pour coopérer avec le pointeau du robinet.

Selon une autre caractéristique avantageuse de l'invention, les moyens pour obturer ou dégager les secondes lumières aménagées dans la cloison de séparation, selon que le disque rotatif se trouve dans l'une ou l'autre de ses positions angulaires déterminées, peuvent être constitués par des clapets à ressort, dont lesdites secondes lumières forment les sièges respectifs, et qui sont commandés par des cames solidaires en rotation de ce disque.

Dans une variante, les moyens pour régler de l'extérieur du distributeur, par exemple manuellement, simultanément les sections des secondes lumières,de manière qu'elles soient toujours égales entre elles,peuvent former avec lesdites lumières des robinets à pointeau, qui peuvent être manoeuvrés manuellement de l'extérieur du distributeur, de préférence au moyen d'un bouton rotatif unique, accouplé par des engrenages avec les tiges des différents robinets.

Enfin, selon une autre caractéristique avantageuse de l'invention, un second clapet de retour à ressort de fermeture peut être aménagé pour contrôler une communication entre la chambre de pression et la chambre de retour, et des cames, solidaires en rotation du disque rotatif, peuvent être disposées de façon à ouvrir ledit second clapet de retour dans toutes les positions angulaires du disque, intermédiaires entre ses positions déterminées. Cette disposition évite toute élévation dangereuse de la pression régnant dans la chambre de pression lorsque le disque rotatif se trouve dans une position angulaire telle que la chambre de pression est isolée des sections de rampe.

A titre d'exemples,on a décrit ci-dessous et illustré schématiquement au dessin annexé deux formes de réalisation du sélecteur rotatif selon la présente invention.

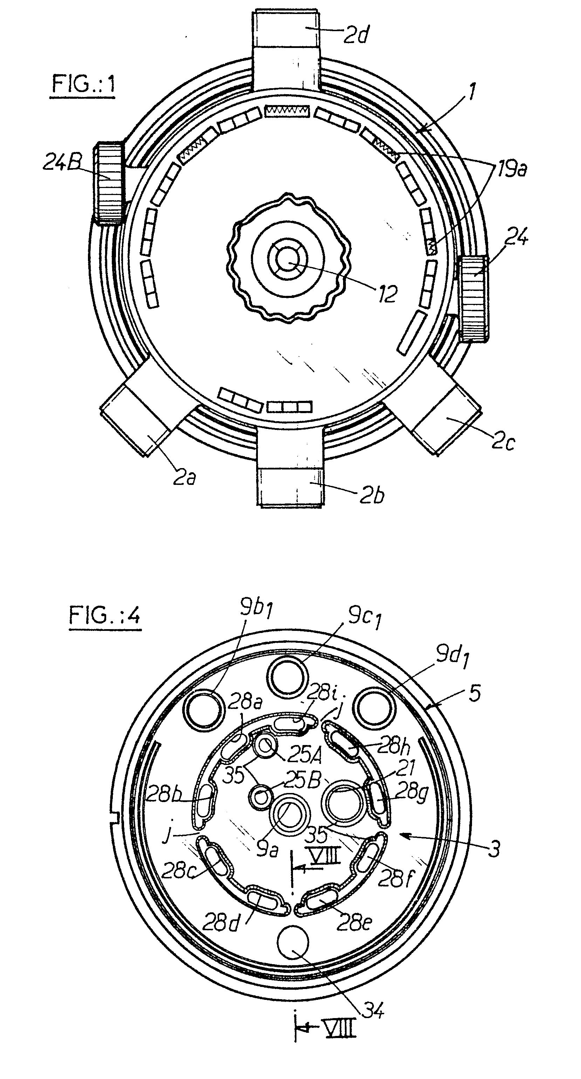

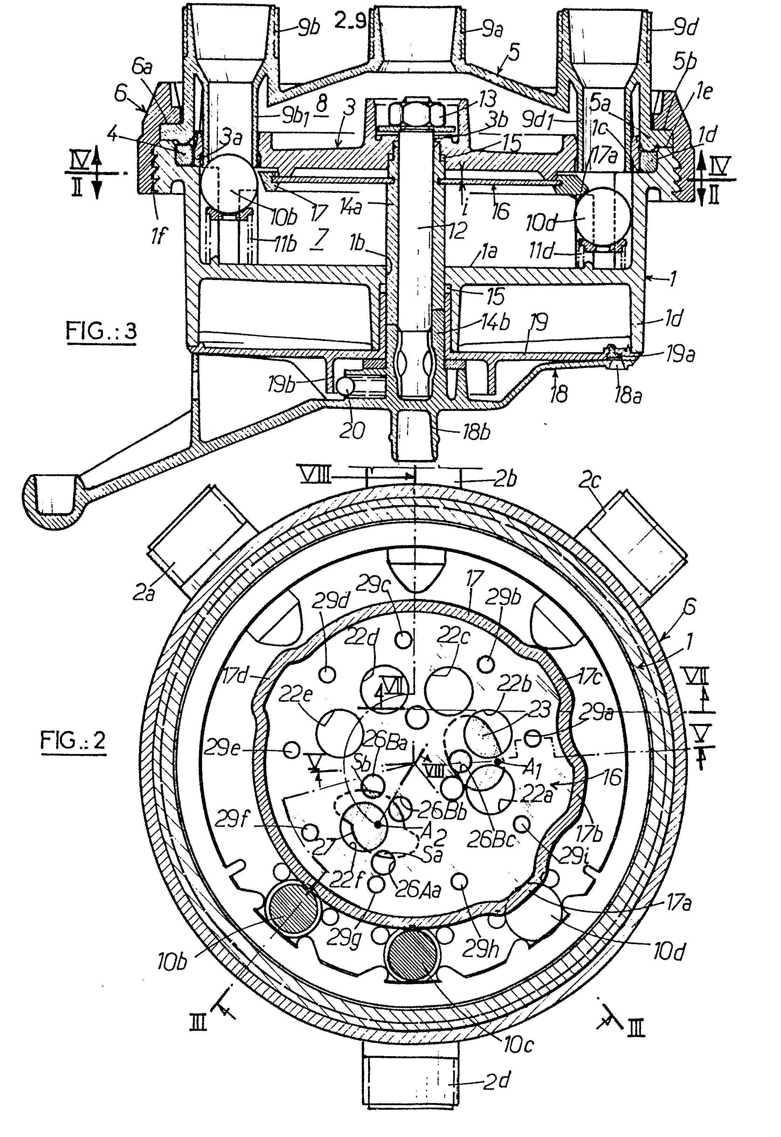

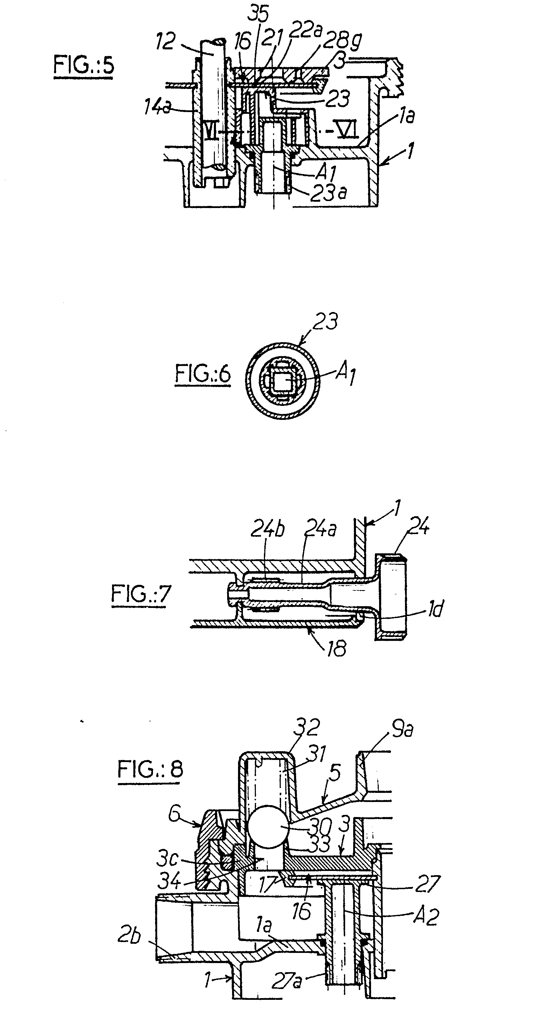

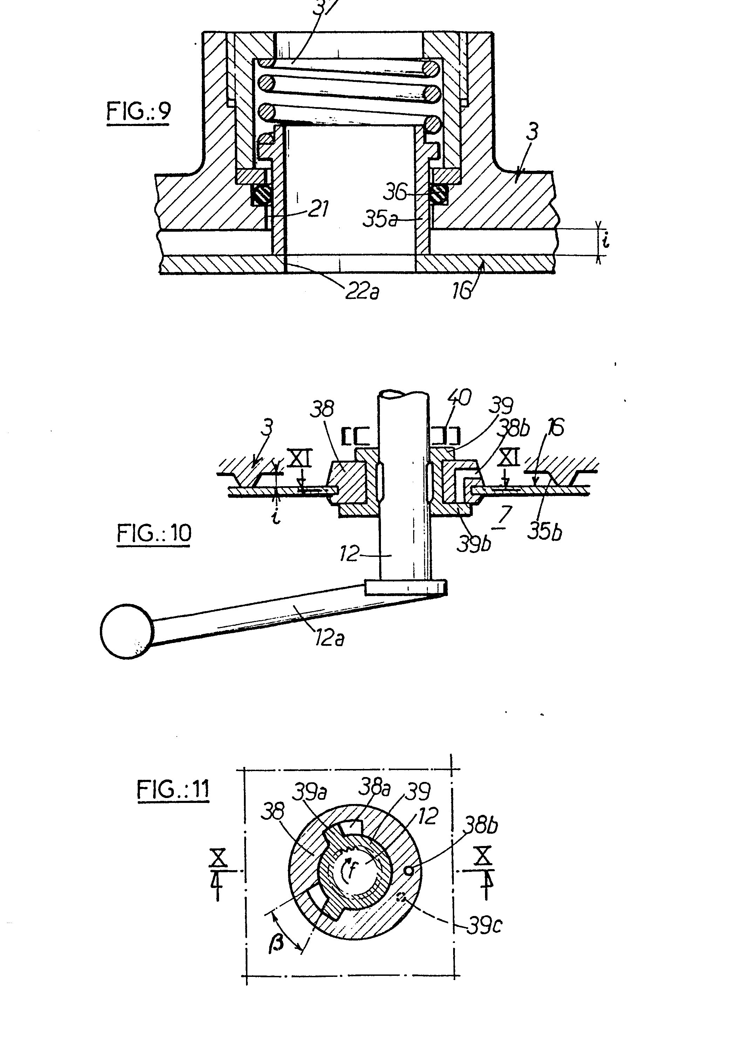

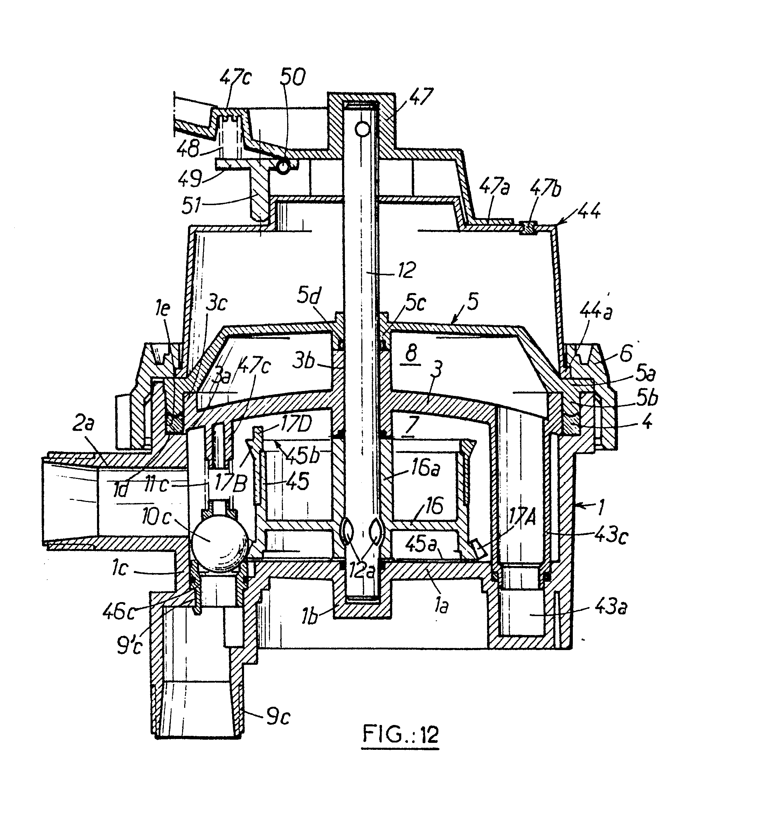

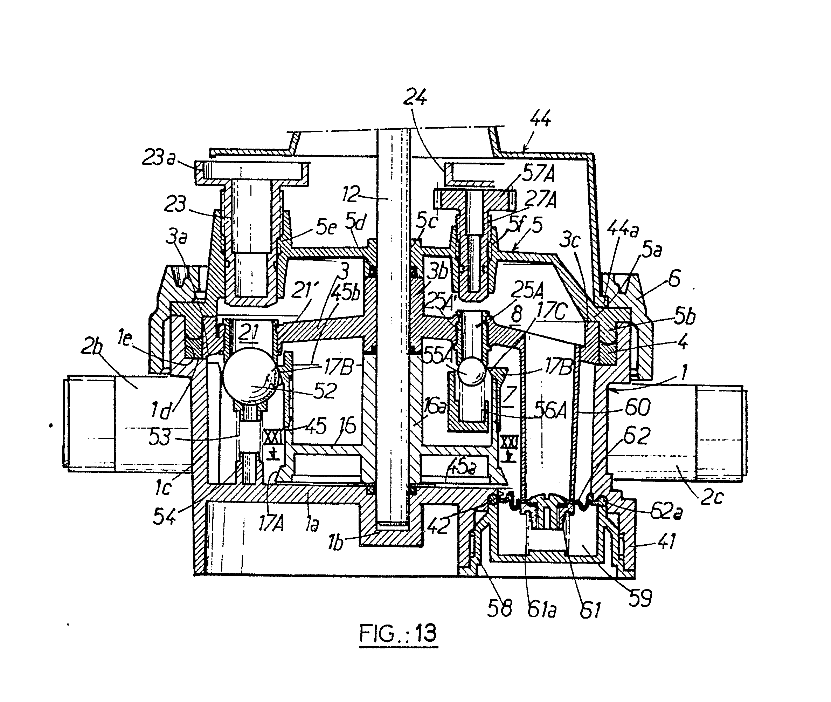

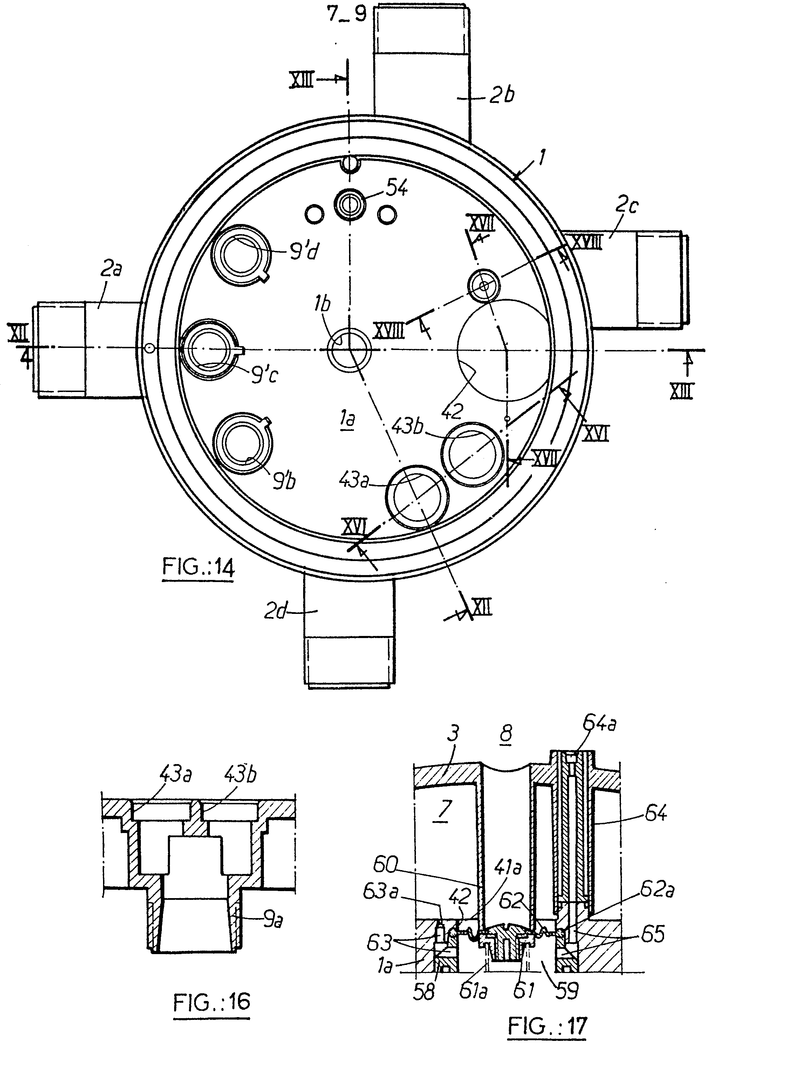

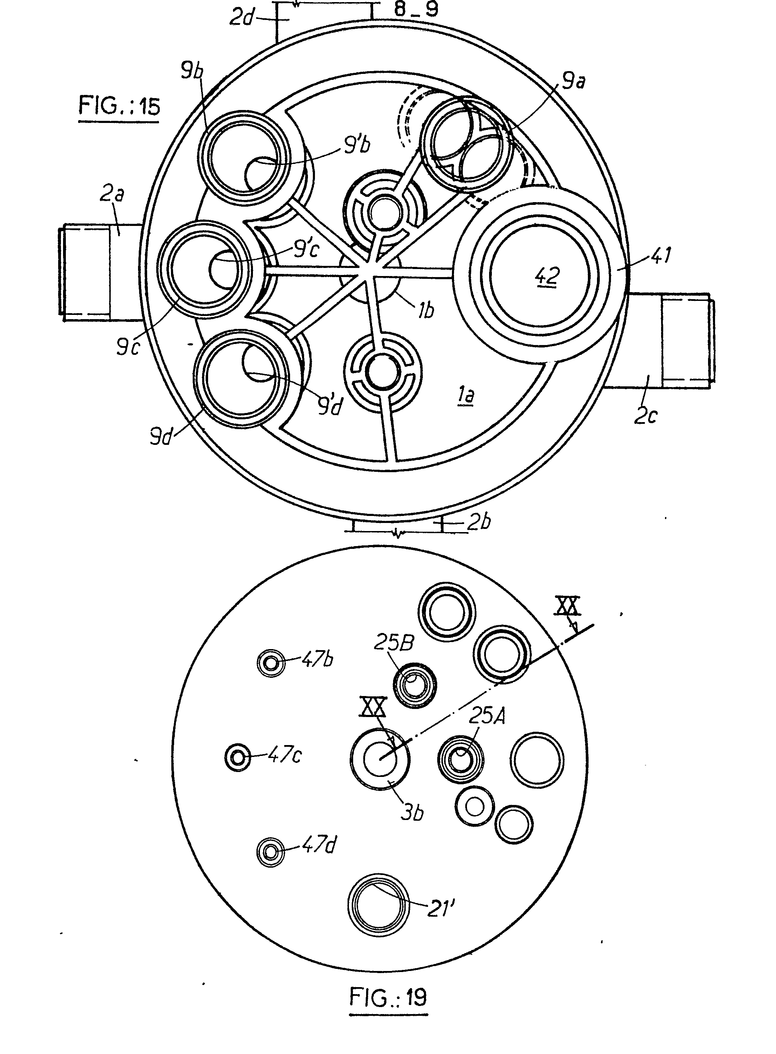

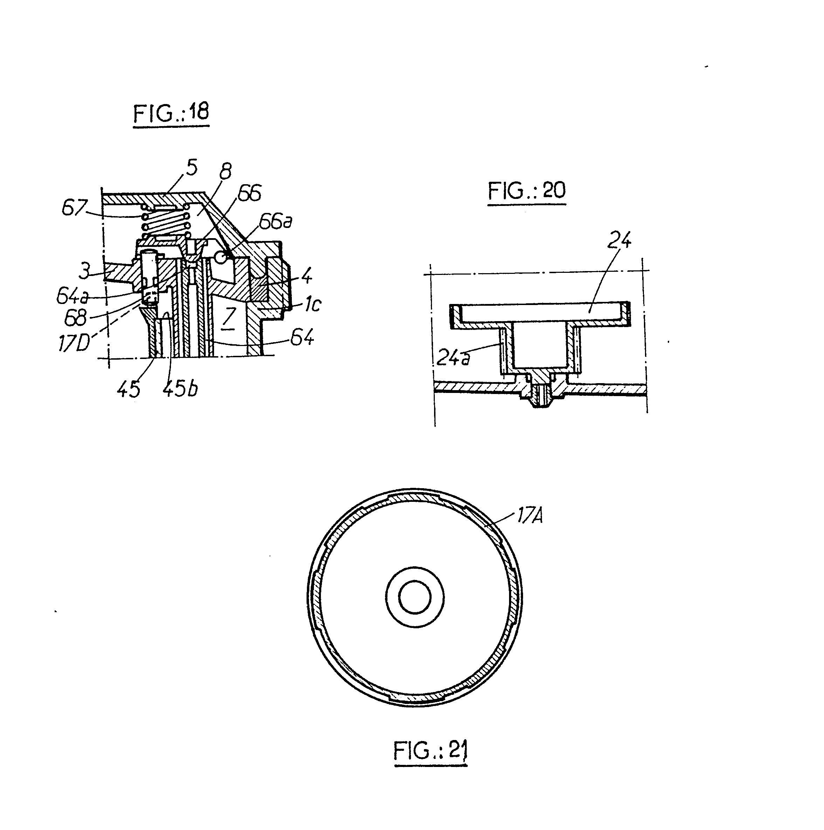

La figure 1 est une vue de dessous du boîtier de la première forme de réalisation de l'invention, après enlèvement d'un élément, tel qu'un disque perforé, servant à repérer la position du distributeur rotatif. Les figures 2 et 3 sont des vues en coupe respectivement suivant les lignes II-II et III-III des figures 3 et 2. La figure 4 est une vue en coupe suivant la ligne IV-IV de la figure 3. La figure 5 est une coupe suivant la ligne V-V de la figure 2. La figure 6 est une vue en coupe suivant la ligne VI-VI de la figure 5. Les figures 7 et 8 sont des vues en coupe respectivement suivant les lignes VII-VII et VIII-VIII de la figure 2. La figure 9 représente à grande échelle une variante d'un détail. La figure 10 est une vue partielle d'une variante, correspondant à la figure 3. La figure 11 est une vue en coupe suivant la ligne XI-XI de la figure 10. Les figures 12 et 13 sont respectivement des vues en coupe suivant les lignes XII-XII et XIII-XIII de la figure 14. La figure 14 est une vue en plan de la pièce en forme de cuvette qui constitue le corps du distributeur rotatif selon les figures 12 et 13, toutes les autres pièces de ce dernier ayant été supprimées. La figure 15 est une vue de dessous de la pièce en forme de cuvette de la figure 14. Les figures 16, 17 et 18 sont des vues en coupe respectivement suivant les lignes XVI-XVI, XVII-XVII et XVIII-XVIII de la figure 14. La figure 19 est une vue de dessous montrant seulement la cloison de séparation entre la chambre de pression et la chambre de retour du distributeur rotatif selon les précédentes figures. La figure 20 est une vue partielle en coupe suivant la ligne XX-XX de la figure 19. La figure 21 est une vue partielle en coupe suivant la ligne XXI-XXI de la figure 13.

Comme visible sur les figures 1 à 3, le distributeur rotatif selon la présente invention comporte un boîtier cylindrique plat, qui est constitué essentiellement par l'assemblage des pièces suivantes : une pièce en forme de cuvette, 1, a son fond 1a (figure 3) perforé en son centre en 1b; près de son fond 1a débouchent quatre tubulures radiales, 2a à 2d. Une pièce 3, sensiblement en forme de disque circulaire, de diamètre un peu supérieur au diamètre intérieur de la pièce en forme de cuvette 1, repose, par son bord 3a, sur le bord interne 1c d'une rainure annulaire aménagée à la partie supérieure de ladite pièce 1. Entre la paroi verticale, 1d, de cette rainure annulaire et le bord 3a de la pièce en forme de disque 3 est inséré un joint annulaire 4, de hauteur un peu inférieure à celle du bord 3a. La partie supérieure du boîtier est formée par une pièce en forme de calotte 5, qui comporte une jupe latérale 5a, dont une partie vient reposer sur une portée horizontale supérieure, 1e, de la pièce 1, tandis qu'une autre partie repose sur le joint 4 en l'écrasant légèrement. Les deux pièces 1 et 5 sont assemblées par un anneau cylindrique 6, qui vient se visser extérieurement sur un filetage externe, 1f, de la partie supérieure de la pièce 1, l'anneau 6 comportant une portée 6a qui vient bloquer la pièce 5 au niveau d'une portée 5b. La pièce 3 en forme de disque constitue donc une cloison de séparation entre une chambre inférieure 7, dite chambre de pression, dans laquelle débouchent les quatre tubulures radiales 2a à 2d, et une chambre supérieure 8, dite de retour, dans laquelle débouche une tubulure 9a, disposée axialement, au centre de la pièce en forme de calotte 5. Cette dernière est en outre munie sur son pourtour de trois tubulures, 9b à 9d, également de direction axiale, dont chacune est prolongée vers le bas par une jupe sensiblement cylindrique, telle que 9b1 ou 9d1, qui traverse de façon étanche la pièce 3, pour déboucher dans la partie supérieure de la chambre de pression 7. L'extrémité inférieure de chaque jupe, telle que 9b1 ou 9d1, est rodée de façon à former un siège pour une bille 10b ou 10d, qu'un ressort, 11b ou 11d, prenant appui sur le fond 1a de la pièce en forme de cuvette 1, vient appliquer de façon étanche contre son siège rodé.

D'autre part, un axe 12 traverse la chambre de pression 7, dont il sort en traversant le perçage central 1b de son fond 1a, pour s'étendre sur une certaine distance vers le bas; l'extrémité supérieure de l'axe 12 traverse par contre un perçage axial correspondant, 3b, de la cloison de séparation 3, par rapport à laquelle ladite extrémité de l'axe 12 est arrêtée par un écrou 13. L'axe 12 est entouré par et solidaire d'un manchon rotatif en deux parties superposées, 14a et 14b, solidarisées entre elles par tous moyens appropriés; sa partie supérieure 14a a ses extrémités engagées respectivement dans le perçage axial 3b de la cloison 3 et dans le trou central 1b du fond 1a de la pièce en forme de cuvette 1, l'étanchéité étant assurée par deux joints toriques 15; près de son extrémité supérieure, ladite partie 14a du manchon rotatif comporte une rainure annulaire dans laquelle est encastré le bord intérieur d'un disque annulaire 16, dont la face supérieure est appliquée contre des saillies de la face inférieure de la cloison de séparation 3, et le bord externe s'étend jusqu'au voisinage des billes, telles que 10b et 10d, des clapets précédemment décrits. Comme visible, notamment, sur la figure 2, le bord extérieur du disque rotatif 16 est encastré dans un encadrement 17, par exemple en matière synthétique moulée, qui, dans l'exemple de réalisation illustré, comporte quatre saillies radiales formant cames, 17a à 17d. On voit sur la figure 3 que, lorsqu'une saillie formant came, par exemple 17a, arrive au contact de la bille de l'un des clapets, par exemple 10d, à la suite d'une rotation du disque 16 dans un sens quelconque, ladite came 17a pousse la bille 10d vers le bas en comprimant le ressort de rappel correspondant, 11d, de manière à ouvrir le clapet correspondant, c'est-à-dire à établir une communication entre la tubulure axiale de sortie 9d, d'une part, et la chambre de pression 7, d'autre part. Par contre, les parties de l'encadrement 17 du disque 16 qui ne forment pas des saillies radiales, ne viennent pas en contact avec les billes des clapets, quelle que soit la position angulaire du disque rotatif 16. La partie inférieure 14b du manchon rotatif est solidaire, par exemple venue de moulage avec une pièce circulaire 18, dont le pourtour comporte une fenêtre 18a, laissant apparaître des repères marqués sur la face correspondante d'un disque 19, solidaire de la partie inférieure de la pièce 1, notamment d'une jupe inférieure 1d de cette pièce. Ces repères, tels que 19a, permettent d'identifier un certain nombre de positions déterminées du disque rotatif 16; elles sont définies matériellement par un encliquetage à bille 20, qui est solidaire en rotation du disque 18, et dont la bille coopère avec des empreintes aménagées sur la surface interne d'une jupe 19b, elle-même solidaire du disque fixe 19. L'entraînement en rotation de l'ensemble 12-14a-14b-16-18 est produit, généralement à la main, au moyen par exemple d'une poignée ou d'un volant (non représenté), coopérant avec un moyeu 18b, solidaire du disque 18.

Dans l'exemple de réalisation illustré, la tubulure radiale 2a est raccordée, par des tuyaux, non représentés, à un hydro-injecteur, d'un type connu, qui peut être utilisé, de façon connue en soi, pour le remplissage du réservoir de l'installation avec le liquide à pulvériser; la tubulure radiale 2b est raccordée, par un tuyau non représenté, au refoulement de la pompe volumétrique, également non représentée, de l'installation de pulvérisation; la tubulure radiale 2c est raccordée par un tuyau souple, non représenté, à une lance à main, d'un type connu, permettant des pulvérisations locales; sur la tubulure radiale 2d, est monté directement un manomètre, non représenté, sur lequel l'utilisateur peut lire la pression régnant dans la chambre de pression 7. Par ailleurs, la tubulure axiale 9a est raccordée par un tuyau, non représenté, au réservoir de liquide à pulvériser, également non représenté, tandis que les trois tubulures périphériques, de direction axiale, 9b, 9c et 9d, sont raccordées, par des tuyaux non représentés, respectivement à trois sections de rampe distinctes, qui correspondent, par exemple, respectivement aux parties gauche, G, centrale, C, et droite, D, d'une même rampe de pulvérisation. Lorsque le disque rotatif 16 occupe la position angulaire qui est représentée sur les figures 2 et 3, seule la bille 10d du clapet correspondant est poussée vers le bas, si bien que seule la section droite D, de la rampe est alimentée, par l'intermédiaire de la tubulure 9d, avec le liquide à pulvériser que la pompe envoie dans la chambre de pression 7 par la tubulure radiale 2b. C'est l'une des "positions angulaires déterminées" du disque 16, qui ont été mentionnées précédemment, et qui sont définies par le dispositif 19b-20. Dans l'exemple considéré, il y a sept positions angulaires déterminées, dont une correspond à l'utilisation, précédemment indiquée, de l'hydro-injecteur, les trois clapets montés aux entrées des tubulures axiales 9b à 9d étant alors fermés, trois positions correspondent respectivement à l'alimentation d'une seule section de rampe, G, C ou D, le clapet correspondant étant seul ouvert, deux positions qui correspondent à l'alimentation simultanée de deux des sections de rampe, C et G ou C et D, les deux clapets correspondants étant ouverts simultanément, et enfin une position qui correspond à l'alimentation simultanée des trois sections de rampe, G, C et D, les trois clapets étant ouverts simultanément par l'action des cames 17a à 17c. Ces sept positions déterminées du distributeur rotatif sont indiquées par les apparitions respectives des repères 19a (figures 1 et 3) à travers la fenêtre 18a du disque 18.

Selon la présente invention, la cloison de séparation 3 est traversée par une première lumière 21 (figures 4 et 5), qui peut être démasquée par l'une des six premières lumières, 22a à 22f, aménagées dans le disque rotatif 16, lorsque ce dernier se trouve dans l'une de ses six positions angulaires déterminées, correspondant à l'alimentation d'une ou plusieurs sections de rampe; pour la position du disque 16 illustrée au dessin, la première lumière 21 de la cloison de séparation 3 est démasquée par la première lumière 22a du disque 16. D'autre part, la section des

premières lumières coïncidentes, 21, 22a, dans l'exemple considéré, peut être réglée au moyen d'un premier obturateur, mobile dans la zone de la première lumière, 21, de la cloison de séparation 3, qui est fixe. Dans l'exemple de réalisation illustré, cet obturateur mobile est une came 23 (figures 2 et 5), qui est montée contre la face inférieure du disque rotatif 16, opposée à la cloison de séparation 3, de manière à pouvoir pivoter autour d'un axe A1, perpendiculaire au plan du disque 16. Les figures 2 et 5 montrent que la came 23 est un excentrique dont la rotation autour de l'axe A1 permet de masquer la section des premières lumières coïncidentes, par exemple 21 et 22a, dans une proportion que l'on peut faire varier de façon continue entre zéro et la totalité de la section. Dans l'exemple illustré, la rotation de la came 23 peut être réalisée manuellement, au moyen d'un bouton moleté 24 (figures 1 et 7), dont la tige 24a est montée librement tournante dans la partie inférieure de la pièce 1, et porte une vis sans fin, 24b, venant engrener avec un pignon hélicoïdal 23a, concentrique à l'axe A1 de la came 23 et solidaire d'un prolongement inférieur de cette came, traversant le fond 1a de la pièce 1 et s'étendant en-dessous de ce fond, comme visible sur la figure 5.

Selon une autre caractéristique de l'invention, la cloison de séparation 3 est traversée par deux secondes lumières, 25A et 25B (figure 4); lorsque le disque rotatif 16 se trouve dans l'une de ses trois positions angulaires déterminées, pour chacune desquelles une seule section de rampe est alimentée, les deux secondes lumières 25A et 25B de la cloison de séparation 3 sont démasquées respectivement par deux secondes lumières, telles que 26Aa et 26Ba, du disque 16 (figure 2); par contre, lorsque le disque rotatif 16 se trouve dans l'une de ses deux positions angulaires déterminées, pour chacune desquelles deux des sections de rampe sont alimentées, seule la seconde lumière 25B de la cloison 3 est démasquée par une seconde lumière 26Bb ou 26Bc (figure 2); enfin, lorsque le disque 16 est dans sa position déterminée pour laquelle les trois sections de rampe sont alimentées simultanément, les deux secondes lumières 25A et 25B de la cloison de séparation 3 sont masquées par le disque 16.

Selon une autre caractéristique avantageuse de l'invention, un second obturateur est monté mobile dans la zone des secondes lumières 25A et 25B de la cloison de séparation 3, de manière à permettre de régler, de l'extérieur du distributeur, simultanément les sections des secondes lumières coïncidentes, par exemple 25A-26Aa et 25B-26Bb, de manière qu'elles soient toujours égales entre elles. Dans la forme de réalisation considérée, ce second obturateur mobile est également constitué par une came, 27 (figures 2 et 8) qui est montée contre la face inférieure du disque rotatif 16, opposée à la cloison de séparation 3, de manière à pouvoir pivoter autour d'un axe, A2, perpendiculaire au disque 16. Comme, dans l'exemple de réalisation considéré, le distributeur rotatif selon la présente invention est destiné à l'alimentation sélective de trois sections de rampe, il y a au plus deux secondes lumières coïncidentes, par exemple 25A-26Aa et 25B-26Ba, qui doivent être masquées simultanément par la came pivotante 27; l'axe de pivotement, A2, de la came 27, peut donc être situé à égale distance des centres des deux secondes lumières 25A et 25B, fixes, de la cloison de séparation 3, et elle peut présenter un profil symétrique par rapport à son axe A2; en effet, grâce à cette disposition selon la présente invention, comme on peut le voir sur la figure 2, dans le cas où les deux secondes lumières 25A et 25B de la cloison 3 sont démasquées simultanément par les deux secondes lumières 26Aa et 26Ba du disque 16, la came pivotante unique, 27, peut, selon sa position angulaire autour de l'axe A2, masquer simultanément les deux paires de secondes lumières coïncidentes dans des rapports, qui peuvent varier de façon continue entre la valeur zéro et une valeur correspondant à la section totale des secondes lumières coïncidentes, mais qui sont toujours égaux l'un à l'autre; comme visible sur la figure 2, cela résulte évidemment du fait que, la came 27 comportant deux profils symétriques par rapport à son axe A2, dans toutes les positions angulaires où elles masquent au moins partiellement les deux paires de lumières coïncidentes, les fractions masquées des sections desdites paires de lumières coïncidentes, désignées repsectivement par Sa et Sb, sont égales l'une à l'autre. La commande de la came pivotante 27 peut être analogue à celle, précédemment décrite, de la came pivotante 23, et être placée sous le contrôle d'un bouton rotatif 24B (figure 1), extérieur au boîtier du distributeur rotatif, une transmission de mouvement, par exemple à pignon et à vis sans fin, telle que celle illustrée sur les figures 5 et 7, et précédemment décrite, étant par exemple insérée entre l'axe du bouton rotatif 24B d'une part, et l'axe de la came pivotante 27, d'autre part.

Selon une autre caractéristique de l'invention, des troisièmes lumières, 28a à 28i, traversent la cloison de séparation 3 près de son pourtour, chacune de ces lumières ayant une forme allongée dans la direction périphérique de la cloison circulaire 3; il leur correspond, sur le pourtour du disque rotatif 16, des lumières circulaires, 29a à 29i, l'ensemble desdites lumières 28a à 28i et 29a à 29i étant disposé de manière que les secondes démasquent partiellement les premières lorsque le disque rotatif 16 occupe l'une quelconque de ses positions angulaires, distinctes de ses positions angulaires déterminées, précédemment définies. Dans toutes ces positions angulaires intermédiaires du disque rotatif 16, les pressions régnant respectivement dans la chambre de pression 7 et dans la chambre de retour 8 s'équilibrent pratiquement à travers les paires de troisièmes lumières coïncidentes, alors que, dans chacune des positions déterminées du disque 16, ce dernier obture complètement toutes les troisièmes lumières 28a à 28i de la cloison de séparation 3, comme visible sur la figure 5 pour la troisième lumière 28g de la cloison 3.

Comme visible également sur la figure 8, un clapet de sécurité est monté dans une partie 3c de la cloison de séparation 3, qui n'est jamais masquée par le disque rotatif 16; dans l'exemple illustré, ce clapet de sécurité
comporte une bille 30; un ressort hélicoïdal taré, 31, qui
prend appui contre la paroi supérieure d'une cloche 32,
venue de moulage en saillie sur la face supérieure de la
pièce 5, applique la bille 30 contre un siège rodé 33, qui
entoure un trou 34, traversant la partie mentionnée, 3c,
de la cloison de séparation 3, pour déboucher dans la chambre de pression 7.

Le distributeur rotatif selon la présente invention, qui
vient d'être décrit en détail, est utilisé de la façon suivante : en manipulant la poignée ou le volant (non représenté) qui est accouplé au moyeu 18b, l'utilisateur amène
le disque rotatif 16 par exemple dans la position angulaire déterminée pour laquelle les trois sections de rampe,
G, C et D, sont alimentées simultanément. La pompe volumétrique de l'installation étant entraînée par la prise de
force du tracteur, à un régime qui, pour un rapport déterminé de sa boîte de vitesses, est proportionnel au régime
du moteur du tracteur, l'utilisateur ajuste ensuite le débit des trois sections de rampe en faisant tourner le bouton 24, qui, en faisant pivoter la came 23 autour de son
axe A1, masque une fraction plus ou moins importante de
la section des premières lumières coïncidentes (21 et 22c
dans le cas considéré). Quel que soit le réglage du débit
de retour à travers la section démasquée des premières
lumières coïncidentes, le débit total de liquide envoyé
simultanément vers les trois sections de rampe est toujours proportionnel au régime du moteur du tracteur. L'utilisateur place ensuite manuellement le disque rotatif 16
dans une position angulaire déterminée pour laquelle il
alimente simultanément deux sections de rampe, par exemple C et G; dans cette position du disque 16, ses cames
17b et 17c poussent respectivement les billes 10b et 10c
vers le bas; seule la seconde lumière 25B de la cloison 3 est alors démasquée par la seconde lumière 26Bc du disque 16. Comme le distributeur rotatif ne débite plus que dans deux sections de rampe au lieu de trois, mais que, par contre, en plus de débiter dans la chambre de retour 8, à travers les premières lumières coïncidentes, il débite en outre dans ladite chambre de retour 8 à travers l'unique seconde lumière 25B de la cloison 3 et la seconde lumière coïncidente, 26 Bc du disque 16, l'utilisateur constate généralement sur le manomètre raccordé à la tubulure radiale 2d du distributeur que la pression régnant dans la chambre de pression 7 n'a plus la valeur de consigne qu' elle avait précédemment lorsque les trois sections de rampe étaient alimentées simultanément. Pour rétablir cette valeur de consigne de la pression dans la chambre 7, l'utilisateur ajuste alors la position de la seconde came pivotante 27 en actionnant manuellement le bouton rotatif 24B et en contrôlant sur le manomètre la pression qui s'établit dans la chambre 7. Lorsqu'ensuite l'utilisateur place par exemple le disque rotatif 16 dans la position correspondant à l'alimentation d'une seule des trois sections de rampe, par exemple la section C, il peut constater,sur le manomètre, que la pression dans la chambre 7 reste pratiquement à sa valeur de consigne; ceci est dû au fait que, dans cette position du disque 16, la chambre de pression 7 débite vers la chambre de retour 8, non plus seulement à travers la première paire de secondes lumières coïncidentes, 25B et 26Ba, mais en outre à travers la seconde paire de secondes lumières coïncidentes, 25A et 26Aa,les deux paires de secondes lumières coïncidentes ayant par ailleurs leurs sections partiellement obstruées dans le même rapport, respectivement par les deux profils de la came 27, symétriques par rapport à son axe A2.

Comme on l'a déjà indiqué, dans toutes les positions du disque rotatif 16, intermédiaire entre ses positions angulaires déterminées par le dispositif 19b-20, l'équilibrage des pressions entre les chambres 7 et 8 évite que, en faisant passer le disque rotatif 16 d'une telle position intermédiaire dans sa position déterminée la plus proche, l'utilisateur n'ait à appliquer un fort couple pour surmonter, en plus des forces de rappel appliquées respectivement aux billes d'un, deux ou trois clapets, des forces de pression appliquées auxdites billes dans la chambre de pression 7.

La présente invention n'est pas limitée à la forme de réalisation illustrée et précédemment décrite. Elle englobe toutes ses variantes. Les troisièmes lumières sont facultatives. Au lieu d'être constitués par des cames pivotantes, les obturateurs mobiles pourraient être constitués par des coulisseaux, auxquels des mouvements de translation pourraient être communiqués de l'extérieur du distributeur rotatif, manuellement, éventuellement au moyen de boutons rotatifs, commandant des transmissions de mouvements réalisées de façon à convertir les rotations des boutons en translations des coulisseaux. Bien entendu, les cames pivotantes, ou les obturateurs coulissants de fonctions équivalentes, au lieu d'être montés dans la chambre de pression 7, pour coopérer avec les premières et secondes lumières du disque rotatif 16, pourraient être montés dans la chambre 8, pour coopérer avec les premières ou secondes lumières de la cloison de séparation 3. Bien entendu, la présente invention permet aussi de réaliser un distributeur rotatif susceptible d'alimenter à volonté une ou plusieurs/N sections de rampe, N étant un nombre entier qui peut être éventuellement très supérieur à 3. Quelle que soit la valeur de l'entier N, au moins égale à 2, le distributeur rotatif selon la présente invention peut comporter une position dans laquelle il alimente simultanément les N sections de rampe, N positions dans lesquelles il alimente respectivement une seule des N sections de rampe, ainsi qu'un certain nombre de positions dans lesquelles il alimente simultanément un certain nombre des N sections de rampe; il est donc possible d'affecter à chacune des positions prédéterminées du dis-

tributeur rotatif selon la présente invention, un indice J égal à 1,2...N, selon que la position considérée correspond à l'alimentation simultanée de 1, 2...N sections de rampe, supposées identiques entre elles. Dans ce cas général, pour maintenir une pression constante dans la chambre de pression pour toutes les positions angulaires prédéterminées d'indice 1 à N, il faut aménager dans la cloison de séparation 3, un groupe de (N-1) secondes lumières (les secondes lumières 25A et 25B dans le cas N = 3), ainsi que, dans le disque rotatif 16, pour chacune des positions angulaires d'indice J, un groupe de (N-J) secondes lumières, disposées de façon à démasquer seulement (N-J) des (N-1) secondes lumières de la cloison de séparation 3 lorsque le disque est dans la position angulaire correspondante, d'indice J; dans le cas particulier où N = 3, pour chaque position angulaire d'indice J = 1, il faut donc prévoir un groupe de deux secondes lumières, tel que 26Aa et 26Ba, dans le disque 16, tandis que pour chacune des positions angulaires d'indice J = 2, il suffit de prévoir une seule seconde lumière, telle que 26 Bb ou 26Bc, dans le disque 16.

Une forme de réalisation typique du distributeur rotatif selon la présente invention permet d'alimenter les sections de rampe avec un débit maximum de 100 1/mn, sous une pression de 15 bars.

Sur les figures 3, 4 et 5, on voit clairement qu'un faible intervale i est aménagé entre le disque rotatif 16 et la cloison de séparation 3, et que chacune des lumières 21, 25A, 25B et 28a à 28i de la cloison 3 est bordée, dans ledit intervalle i, par une nervure continue d'étanchéité 35, qui vient en contact avec le disque 16 (figure 5). On voit en outre, sur la figure 4, que certaines des nervures d'étanchéité 35 entourent plusieurs des lumières 28a à 28i, mais qu'il subsiste entre elles des interruptions j, qui font communiquer l'intervalle i avec la chambre de pression 7. Grâce à cette disposition, le disque rotatif 16 est soumis à la même pression sur ses deux faces, ce qui évite ses déformations qui nuiraient à l'étanchéité mutuelle des différentes lumières; celle-ci est par contre assurée dans de bonnes conditions par les nervures d'étanchéité 35; à titre de variante, celles-ci pourraient être associées aux lumières du disque 16.

La figure 9 illustre une variante dans laquelle la nervure d'étanchéité de certaines au moins des lumières, par exemple 21, de la cloison de séparation 3, est remplacée par une chemise 35a, coulissant dans ladite lumière 21, dont l'étanchéité est maintenue par un joint torique 36; un ressort hélicoïdal 37, comprimé entre un épaulement externe de la chemise 35a, et un épaulement interne de perçage correspondant de la cloison 3, applique le bord inférieur de ladite chemise 35a autour de la lumière correspondante, par exemple 22a, du disque rotatif 16, de façon à améliorer encore l'étanchéité au niveau du disque 16.

Dans la variante illustrée sur les figures 10 et 11, l'intervalle $i$ entre la cloison de séparation 3 et le disque rotatif 16 est isolé de la chambre de pression 7, par une nervure d'étanchéité, 35b, qui s'étend circulairement sans discontinuité et qui est solidaire du disque 16 ou de préférence de la cloison 3. D'autre part, des moyens sont prévus pour mettre l'intervalle $i$, intérieur à la nervure 35b, en communication temporaire avec la chambre de pression 7, seulement pour toutes les positions angulaires du disque 16, intermédiaires entre ses positions déterminées par le dispositif d'encliquetage (tel que 19b-20 sur la figure 3). Dans la forme de réalisation illustrée, le moyeu 38 du disque rotatif 16 est traversé librement par une pièce 39, qui y est montée rotative, et qui peut être entraînée en rotation par un axe 12 et un bras de manoeuvre 12a. Comme visible sur la vue en coupe de la figure 11, la rotation relative des pièces 38 et 39 est limitée à un an-

gle $\beta$ par la coopération d'ergots tels que 39a et de fentes telles que 38a; dans leur position relative initiale illustrée, vers laquelle les pièces 38 et 39 sont rappelées par un ressort spiral 40, une lumière coudée 38b du moyeu 38 est obturée par une bride inférieure 39b de la pièce 39; par contre, après une rotation relative de l'angle $\beta$ dans le sens de la flèche f (figure 11), la pièce 39 se trouve dans une position d'entraînement positif du disque 16 et de son moyeu 38, dans laquelle sa lumière coudée 38b est démasquée par une lumière 39c de la bride 39b de la pièce 39, de façon à établir une communication temporaire entre l'intervalle $i$ et la chambre de pression 7.

Le dispositif des figures 10 et 11 fonctionne de la façon suivante :

Dans chaque position déterminée du disque rotatif 16, la lumière 38b est obturée, si bien que sa face inférieure est appliquée par la forte surpression régnant dans la chambre 7, contre les lèvres d'étanchéité 35 et 35b (ou éventuellement 35a selon la figure 9), dont l'efficacité est ainsi fortement accrue. Dès que l'utilisateur commence à faire tourner l'axe 12 dans le sens de la flèche f (figure 11) au moyen du bras de manoeuvre 12a, il comprime le ressort spiral 40 sans entraîner en rotation le disque 16; lorsque la pièce 39 est parvenue dans la position d'entraînement positif du moyeu 38, la lumière 38b est démasquée, si bien qu' il y a égalisation des pressions dans l'intervalle $i$ et la chambre 7. En continuant à faire tourner l'axe 12, l'utilisateur entraîne en rotation le disque 16, qui glisse alors facilement au contact des lèvres d'étanchéité 35 (ou 35a) et 35b. Lorsque le disque 16 a été amené dans la position déterminée suivante et que l'utilisateur lâche le bras de manoeuvre 12a, le ressort spiral 40, en se détendant, ramène la pièce 39 et l'axe 12 dans leur position initiale de la figure 11, pour laquelle la lumière 38b est obturée, si bien que l'excès de la pression dans la chambre 7 sur celle dans l'intervalle _i_, renforce alors l'étanchéité au niveau des nervures correspondantes 35 (ou 35a) et 35b. Dans cette réalisation, c'est bien entendu sur le disque 16, ou son moyeu 38, que doit agir le dispositif d'encliquetage.

Dans la réalisation des figures 12 à 14, le distributeur rotatif selon la présente invention comporte un boîtier cylindrique, qui est constitué essentiellement par l'assemblage des pièces suivantes : une pièce en forme de cuvette, 1, a son fond 1a aménagé de la façon suivante : en dessous de sa partie centrale est aménagé un palier de butée, 1b, venu de moulage (voir aussi les figures 14 et 15). Trois tubulures, 9b, 9c, 9d sont également venues de moulage en dessous d'une zone marginale du fond 1a, chacune de ces trois tubulures communiquant avec l'intérieur de la pièce en forme de cuvette 1, par l'un des orifices excentrés, qui sont désignés par 9'b à 9'd sur la figure 14. A l'opposé de la tubulure 9c, le fond 1a est prolongé vers le bas par une jupe cylindrique, 41, dans laquelle s'ouvre un orifice 42 aménagé dans le fond 1a. Enfin, deux perçages, 43a et 43b, traversent le fond 1a pour déboucher dans une tubulure commune, 9a, venue de moulage en dessous dudit fond 1a (voir la figure 16). A travers la paroi latérale 1c de la pièce en forme de cuvette 1 débouchent quatre tubulures radiales, 2a à 2d. Une pièce 3, sensiblement en forme de disque circulaire, de diamètre un peu supérieur au diamètre intérieur de la pièce en forme de cuvette 1, repose, par son bord 3a, sur le bord interne, 1d, d'une rainure annulaire aménagée à la partie supérieure de ladite pièce 1. Entre la paroi verticale de cette rainure annulaire, 1e, et le bord 3a de la pièce en forme de disque est inséré un joint annulaire 4, de hauteur un peu inférieure à celle du bord 3a. La partie supérieure du boîtier est formée par une pièce en forme de calotte, 5, comportant une bride 5a qui vient reposer, par sa face inférieure, à la fois sur le bord supérieur de la paroi latérale 1c de la pièce 1 et sur la face supérieure du bord relevé 3c de la pièce en forme de disque 3; de cette bride 5a se détache, vers le bas, une courte jupe 5b, qui vient s'encastrer exactement entre les bords parallèles des pièces 1c et 3, au-dessus du joint d'étanchéité 4, qu'elle écrase légèrement. Les deux pièces 1 et 5 sont assemblées par un anneau cylindrique 6, qui est fixé, par tous moyens appropriés, autour du bord supérieur de la paroi 1c de la pièce 1, tout en maintenant appliquée contre la bride 5a de la pièce en forme de calotte 5, une bride inférieure, 44a, d'une seconde pièce en forme de calotte, 44, par exemple en tôle mince, qui s'élève au-dessus de ladite pièce 5. La pièce 3 en forme de disque constitue donc une cloison de séparation entre une chambre inférieure 7, dite chambre de pression, dans laquelle débouchent les quatre tubulures radiales, 2a à 2d, et une chambre supérieure, 8, dite de retour, qui est raccordée à la tubulure 2a par des conduits 43c (figure 12) traversant de haut en bas la chambre 7.

Un axe 12, dont l'extrémité inférieure tourne librement dans le palier de butée inférieur 1b, s'étend suivant l'axe de la pièce en forme de cuvette 1, traverse la cloison de séparation 3 par l'intermédiaire d'un manchon 3b, dans lequel il peut tourner librement, puis la première pièce en forme de calotte 5, par l'intermédiaire d'un palier 5c, muni d'un joint d'étanchéité 5d; enfin l'extrémité supérieure de l'axe 12 sort de la seconde pièce en forme de calotte, 44, par l'intermédiaire d'un trou dans lequel il peut également tourner librement. Un disque 16, enfilé autour de l'axe 12, dans la chambre de pression 7, est solidarisé en rotation avec cet axe 12 par l'intermédiaire d'un moyeu 16a et, par exemple, de formes complémentaires, 12a, comme visible sur la figure 12. Un manchon tubulaire 45 est fixé coaxialement au pourtour du disque rotatif 16, de façon à s'étendre depuis une extrémité inférieure 45a, voisine de la face supérieure du fond 1a de la pièce en forme de cuvette 1, jusqu'à une extrémité supérieure, 45b, située à une plus grande distance en dessous de la cloison de séparation 3.

Dans chacun des trous excentrés, 9'b à 9'd, débouchant respectivement dans les tubulures inférieures 9b à 9d, est encastré un siège (tel que 46c sur la figure 12) pour la bille 10c d'un clapet; chaque bille telle 10c est maintenue appliquée sur son siège, 46c, par l'action d'un ressort, 11c, qui est logé dans la chambre de pression 7, et centré au-dessus de la bille correspondante, 10c, par un embout, 47c, se détachant de la face inférieure de la cloison de séparation 3 (voir aussi la figure 19). Le manchon tubulaire 45 est muni, sur sa surface extérieure, près de son extrémité inférieure 45a, de premières cames, 17A, qui, pour certaines positions angulaires déterminées des composants 12, 16 et 45, soulèvent l'une au moins des billes, telles que 10c, au-dessus de son siège, 46c, les ressorts correspondants, tels que 11c, maintenant par contre les billes telles que 10c, appliquées sur leur siège tel que 46c, pour toutes les autres positions angulaires des composants 12, 16 et 45. L'extrémité supérieure de l'axe 12 qui sort de la seconde pièce en forme de calotte 44 est accouplée avec une pièce 47, dont une extrémité radiale, 47a, forme un index qui peut être amené en coïncidence avec des repères, 47b, aménagés sur une partie plane de la face supérieure de la pièce 44, de façon à repérer différentes positions angulaires de l'ensemble 12-16-45, comme on le précisera ultérieurement plus en détail. L'extrémité de la pièce 47, qui est diamétralement opposée à l'index 47a, comporte un logement, 47c, pour l'extrémité supérieure d'un ressort hélicoïdal 48, dont l'extrémité inférieure agit sur un bras 49 d'un levier coudé, pivotant autour d'un axe fixe, 50, solidaire de la pièce 47, de manière à appliquer le bras 51 dudit levier dans des encoches aménagées dans une partie de la pièce 44, et disposées de façon à assurer un blocage léger de l'ensemble rotatif 47-12-16-45 dans chacune de ses positions angulaires pour lesquelles l'index 47a se trouve en regard de l'un des repères 47b.

Dans l'exemple de réalisation illustré, la tubulure radiale 2b ou 2d peut être raccordée, par des tuyaux, non représentés, à un hydro-injecteur, d'un type connu, qui peut être utilisé, de façon connue en soi, pour le remplissage du réservoir de l'installation avec le liquide à pulvériser; la tubulure radiale 2c est raccordée, par un tuyau non représenté, au refoulement de la pompe volumétrique, également non représentée, de l'installation de pulvérisation; l'une au moins des tubulures radiales 2b et 2d peut être raccordée par au moins un tuyau souple, non représenté, à au moins une lance à main, d'un type connu, permettant des pulvérisations locales; sur la tubulure radiale 2a est monté directement un manomètre, non représenté, sur lequel l'utilisateur peut lire la pression régnant dans la chambre de pression 7. Par ailleurs, la tubulure inférieure 9a est raccordée par un tuyau, non représenté, au réservoir de liquide à pulvériser, également non représenté, tandis que les trois autres tubulures inférieures, 9b, 9c et 9d, sont raccordées, par des tuyaux non représentés, respectivement à trois sections de rampe distinctes, qui correspondent, par exemple, respectivement aux parties droite D, centrale C, et gauche G, d'une même rampe de pulvérisation.

Dans l'exemple considéré, le dispositif rotatif précédemment décrit, 47-12-16-45, peut donc prendre sept positions angulaires déterminées, dont une correspond à l'utilisation, précédemment indiquée, de l'hydro-injecteur ou de la ou des lances à main, les trois clapets à billes, montés aux entrées des tubulures inférieures 9b à 9d étant alors fermés, trois positions correspondent respectivement à l'alimentation d'une seule section de rampe, G, C ou D, le clapet correspondant étant seul ouvert, deux positions qui correspondent à l'alimentation simultanée de deux des sections de rampe, C et G ou C et D, les deux clapets correspondants étant ouverts simultanément, et, enfin, une position qui correspond à l'alimentation simultanée des trois sections de rampe, G, C et D, les trois clapets étant ouverts simultanément par l'action des cames telles que 17A.

Selon la présente invention, un clapet est aménagé dans la chambre de pression 7 de manière à obturer une première lumière de retour, 21, dans l'une au moins des positions angulaires déterminées du dispositif rotatif 12-16-45; dans la forme de réalisation illustrée sur la figure 13, ce clapet comporte une bille 52, qui est normalement poussée contre le siège délimitant la lumière 21 par un ressort hélicoïdal 53, prenant appui sur un embout 54 venu de moulage sur la face supérieure du fond 1a de la pièce en forme de cuvette 1 (voir aussi la figure 14). La première lumière de retour, 21, est ainsi obturée par la bille 52 dans l'une au moins des positions angulaires déterminées qui ont été définies précédemment, et, plus particulièrement, dans sa position angulaire correspondant au fonctionnement, soit de l'hydro-injecteur, soit de la lance à main. Dans toutes les autres positions angulaires déterminées, c'est-à-dire lorsqu'il y a alimentation de l'une au moins des sections de la rampe de pulvérisation, la bille 52 du clapet de retour est écartée de son siège, par l'action de secondes cames, 17B, qui, dans l'exemple de réalisation illustré, forment une rangée annulaire sur la surface extérieure du manchon tubulaire 45, près de son extrémité supérieure 45b. Selon une autre caractéristique de l'invention, la section de la première lumière de retour 21 peut être réglée grâce à un robinet à pointeau 23, dont le corps est vissé dans un embout taraudé 5e, traversant la première pièce en forme de coupole 5, de manière que l'extrémité inférieure dudit corps pénètre dans la chambre 8 et vienne coopérer avec la première lumière de retour 21. Celle-ci est délimitée par un conduit 21', qui est encastré dans la cloison de séparation 3, et qui se termine par deux sièges, l'un, dans la chambre de pression 7, pour coopérer avec la bille 52 du clapet correspondant, et l'autre siège, dans la chambre de retour 8, pour coopérer avec le pointeau du robinet 23. En manoeuvrant le corps du robinet 23 au moyen d'un bouton moleté, 23a, accessible de l'extérieur de la seconde pièce en forme de coupole, 44, on peut régler manuellement la section de la première lumière de retour 21, de façon à ajuster le débit d'alimentation des sections de rampe, de manière qu'il soit toujours proportionnel au régime de la prise de force du tracteur, donc à sa vitesse de déplacement pour un rapport déterminé de sa boîte de vitesses.

Selon une autre caractéristique de l'invention, la cloison de séparation 3 est traversée par deux secondes lumières, 25A et 25B (voir les figures 13 et 19), qui, selon que le dispositif rotatif 12-16-45 se trouve dans l'une ou l'autre de ses positions angulaires déterminées, peuvent être obturées séparément par les billes telles que 55A (figure 13), qu'un ressort, tel que 56A, applique sur le siège entourant la lumière 25A. L'ouverture de chaque bille de clapet telle que 55A est commandée par des troisièmes cames, 17C, qui, dans la forme de réalisation considérée, sont disposées suivant une rangée annulaire, sur la surface intérieure du manchon tubulaire 45, près de son extrémité supérieure 45b. Ces troisièmes cames, 17C, sont aménagées de manière à dégager une seule des deux lumières 25A et 25B lorsque les premières cames 17A, pour la position considérée du dispositif rotatif, assurent l'alimentation de deux seulement des trois sections de la rampe de pulvérisation, et à dégager simultanément les deux secondes lumières 25A et 25B lorsqu'une seule section de la rampe de pulvérisation est alimentée, alors que lesdites secondes lumières 25A et 25B sont toutes deux obturées par les billes correspondantes lorsque les trois sections de la rampe sont alimentées. Grâce à cette disposition, la pression de pulvérisation peut être maintenue sensiblement constante, quel que soit le nombre de sections de rampe en service.

Selon une autre caractéristique avantageuse de l'invention, des moyens sont prévus pour régler les sections des secondes lumières 25A et 25B; comme dans le cas de la première lumière 21, ce réglage est obtenu au moyen de robinets à pointeau, tels que 27A, dont chacun est également vissé dans un embout taraudé intérieurement, 5f, qui traverse la première pièce en forme de calotte 5, de manière que le pointeau du robinet correspondant, par exemple 27A, vienne coopérer avec la lumière correspondante 25A; cette dernière est encore délimitée par un élément tubulaire 25A' comportant deux sièges, l'un dans la chambre de pression 7, pour coopérer avec la bille 55A, et l'autre siège, dans la chambre de retour 8, pour coopérer avec le pointeau du robinet 27A. La disposition est analogue pour la seconde lumière 25B et son robinet à pointeau 27B. Par ailleurs, les corps des deux robinets à pointeau 27A et 27B peuvent être manoeuvrés manuellement, de l'extérieur du distributeur, au moyen d'un bouton moleté unique (24 sur la figure 20), qui entraîne un pignon 24a, engrenant lui-même avec deux pignons, tels que 57A (figure 13), de façon à permettre la manoeuvre simultanée des deux robinets à pointeau 27A et 27B. On comprend que cette disposition permet de régler simultanément à la même valeur les sections libres des deux secondes lumières 25A et 25B; ce réglage est effectué en s'aidant du manomètre qui est branché à la tubulure radiale 2a, de manière que la pression lue ne varie pas lorsque l'on fait passer le sélecteur rotatif d'une position angulaire correspondant à l'alimentation simultanée des trois sections de rampe, à une position angulaire correspondant à l'alimentation de deux ou d'une seule sections de rampe.

Comme visible notamment sur les figures 13, 15 et 17, l'embout inférieur 41, qui s'ouvre dans le fond 1a de la pièce en forme de cuvette 1, est fermé par un bouchon vissé 58, qui délimite, en dessous du trou correspondant, 42, aménagé dans le fond 1a, une chambre de commande 59, qui est surmontée par un conduit tubulaire 60; l'extrémité inférieure de ce conduit tubulaire 60 se trouve sensiblement au niveau du trou 42, dont la section transversale est notablement supérieure à celle du conduit 60; ce dernier traverse la cloison de séparation 3 pour déboucher dans la chambre de retour 8. L'extrémité inférieure du conduit tubulaire 60 forme un siège pour le corps 61 d'un clapet,qui est poussé contre ledit siège par un ressort hélicoïdal 61a, prenant appui sur le fond de la chambre 59; dans le corps 61 est encastré le bord intérieur d'une membrane annulaire 62, qui peut être d'un type connu approprié; le bord extérieur de cette membrane annulaire, 62a, est luimême encastré dans le bord du trou 41a. La membrane 62 peut être par exemple en caoutchouc et son encastrement dans le corps 61 du clapet peut être réalisé de telle façon qu'elle forme un joint d'étanchéité entre le bord dudit clapet 61 et son siège, formé par l'extrémité inférieure du conduit 60. Comme visible sur la figure 17, la chambre de commande 59 communique, d'une part, avec la chambre de pression 7, par un ajutage 63a et des conduits 63 aménagés dans le fond 1a et dans le bord supérieur du bouchon 58; la chambre de commande 59 communique d'autre part avec la chambre de retour 8 par un ajutage 64a, par un conduit axial, qui est aménagé dans une pièce tubulaire 64 s'étendant depuis le fond 1a de la pièce en forme de cuvette 1, et traversant la cloison de séparation 3, ainsi que par des perçages 65, aménagés dans le fond 1a et dans le bord supérieur du bouchon 58. Comme visible sur la figure 18, l'ajutage 64a par lequel le conduit 64 débouche dans la chambre de retour 8 est normalement fermé par un pointeau culbuteur 66, qui peut pivoter autour d'un axe horizontal 66a et qui est appliqué, de façon à assurer l'étanchéité, contre l'ajutage 64a, par l'extrémité inférieure d'un ressort hélicoïdal 67, dont l'extrémité supérieure prend appui contre la première pièce en forme de coupole 5. L'extrémité du pointeau culbuteur 66, opposée à son axe 66a, peut être soulevée par un poussoir 68, qui traverse de façon étanche un perçage à axe vertical de la cloison de séparation 3, et qui peut être poussé vers le haut par des cames telles que 17D (figure 18). Comme visible sur la figure 12, les cames 17D sont disposées sur le manchon tubulaire 45, suivant une quatrième rangée annulaire, s'étendant axialement au-delà de son extrémité supérieure 45b, qui porte les seconde et troisième rangées annulaires de cames, 17B et 17C.

Ces quatrièmes cames, 17D, sont disposées de façon à soulever le poussoir 68, et, par suite, à écarter le pointeau culbuteur 66 de l'ajutage 64a, dans toutes les positions angulaires du dispositif tournant 12, 16, 45, qui sont intermédiaires entre ses sept positions angulaires déterminées qui ont été mentionnées précédemment. L'ajutage 64a ayant une section notablement supérieure à celle de l'ajutage 63a, il apparaît alors une dépression dans la chambre de commande 59 par rapport à la pression régnant dans la chambre de pression 7, si bien que la membrane 62 est déformée vers le bas, et que, en surmontant la force du ressort hélicoïdal 61a, elle écarte le corps de clapet 61 de son siège, formé par l'extrémité inférieure du conduit tubulaire 60. Il s'établit alors une communication directe, de grande section, par le conduit tubulaire 60, entre la chambre de pression 7 et la chambre de retour 8. Par suite, la pression régnant dans la chambre 7 est maintenue pratiquement égale à celle régnant dans la chambre 8 - en général la pression atmosphérique - pendant toute la durée du mouvement de rotation qui fait passer le distributeur rotatif d'une position angulaire déterminée, correspondant par exemple à l'alimentation d'une seule section de rampe, à l'une des positions angulaires déterminées les plus proches, correspondant par exemple à l'alimentation simultanée de deux sections de rampe. On évite ainsi tout accroissement dangereux de la pression dans la chambre 7 qui se produirait pendant les mouvements de rotation mentionnés du distributeur, alors que la pompe continue à débiter dans ladite chambre 7, et que tous les clapets 10b à 10d sont fermés.

0079815

Selon une autre caractéristique avantageuse de l'invention, les premières cames 17A, commandant les clapets 10b à 10d de raccordement de la chambre de pression 7 avec les différentes sections de rampe, et les quatrièmes cames, 17D, commandant le poussoir 68, et par suite l'ouverture du clapet à membrane 61-62, sont dimensionnées et disposées les unes par rapport aux autres de manière que ledit clapet à membrane 61-62 ne soit refermé qu'un bref instant après l'ouverture de l'un quelconque des clapets de raccordement, 10b à 10d, avec les différentes sections de rampe. Cette disposition réduit l'effort nécessaire à l'ouverture de l'un quelconque des clapets à bille et à ressort, 10b à 10d, puisque la bille correspondante n'est alors soumise, à l'instant où la came 17A correspondante exerce sur elle la force d'ouverture, qu'à la force de rappel du ressort correspondant, par exemple 11c. Bien entendu, dès que le poussoir 68 cesse d'être actionné par l'une des cames 17D, le ressort 67 ramène le pointeau culbuteur 66 dans sa position où il obture l'ajutage 64a; la différence de pression entre la chambre de pression 7 et la chambre de commande 59 s'annulant assez rapidement, le ressort 61a ramène le clapet 61 contre son siège formé par l'extrémité inférieure du conduit 60, si bien que la pression dans la chambre 7 peut recommencer à croître jusqu'à sa valeur nécessaire pour la pulvérisation, qui peut être par exemple de 15 bars.

Par ailleurs, le ressort, 67, de fermeture du pointeau culbuteur 66 peut être taré pour permettre l'ouverture automatique du clapet à membrane 61-62 lorsque la pression régnant dans la chambre 7 dépasse la valeur de consigne, de par exemple 15 bars, cette pression étant transmise à partir de la chambre 7 au poussoir 68 et à l'ajutage 64a par le circuit 63a-63-59-65-64, et produisant le soulèvement dudit pointeau culbuteur 66 contre la force du ressort 67, et, par suite, l'ouverture du clapet à membrane 61-62, comme précédemment décrit.

La présente invention n'est pas limitée aux formes de réalisation illustrées et précédemment décrites. Elle englobe toutes leurs variantes. Un clapet de sécurité, convenablement taré, par exemple un clapet à bille du type illustré sur la figure 8, pourrait être prévu indépendamment du clapet à membrane 61-62. Ce dernier pourrait être réalisé d'une façon différente de celle précédemment décrite; il pourrait s'agir par exemple d'un simple clapet à bille et à ressort, contrôlant un orifice aménagé dans la cloison de séparation 3. Enfin, le distributeur rotatif selon la présente invention peut être télécommandé, par exemple à partir de la cabine du véhicule tracteur; pour cela, l'ensemble formé par les organes de manoeuvre et de réglage tels que 44, 47, 47a, 47b doivent être placés dans la cabine du véhicule tracteur, à portée de son conducteur, et reliés à l'axe 12 par une transmission appropriée, présentant les degrés de liberté nécessaires; les organes tels que 48, 49, 50 et 51 destinés à définir les positions angulaires déterminées du distributeur rotatif doivent cependant rester associés à son axe 12.

<u>REVENDICATIONS DE BREVET</u>

1. Distributeur rotatif, notamment pour faire alimenter à volonté une ou plusieurs sections de rampe d'une installation mobile de pulvérisation d'un liquide de traitement des plantes, par la pompe volumétrique de l'installation, qui est entraînée par la prise de force du tracteur, distributeur comportant une chambre de pression (7) qui est raccordée au refoulement de la pompe, et dans laquelle est monté rotatif un disque (16) muni sur son bord (17) de premières cames (17a) pour commander, dans des positions angulaires déterminées du disque (16), l'ouverture ou la fermeture de clapets (10b...10d), montés aux entrées respectives de tubulures (9b...9d), destinées au raccordement de ladite chambre de pression (7) avec les différentes sections de rampe, et étant caractérisé en ce qu'au moins une première lumière (21) de retour traverse une cloison (3) qui sépare la chambre de pression (7) d'une chambre de retour (8), raccordée au réservoir de liquide, et que, dans le but de permettre d'ajuster le débit d'alimentation des sections de rampe, de manière qu'il soit toujours proportionnel au régime de la prise de force du tracteur, donc à sa vitesse de déplacement pour un rapport déterminé de sa boîte de vitesses, des moyens (23) sont prévus pour régler, de l'extérieur du distributeur, par exemple manuellement, la section de ladite première lumière de retour (21) aménagée dans la cloison de séparation (3).

2. Distributeur rotatif selon la revendication 1, caractérisé en ce que le disque rotatif (16) est pourvu de premières lumières (22) pour, selon sa position angulaire, masquer ou démasquer la première lumière de retour (21).

3. Distributeur rotatif selon l'une quelconque des revendications 1 et 2, caractérisé en ce que les moyens de réglage de la section de la première lumière de retour (21) comprennent un premier obturateur (23), mobile dans la zone de ladite première lumière (21).

4. Distributeur rotatif selon l'une quelconque des revendications 1 à 3, comportant des positions angulaires déterminées, affectées chacune d'un indice numérique J = 1, 2, ... ou N selon qu'elles correspondent respectivement à l'alimentation simultanée de 1, 2, ... ou N sections de rampe, identiques entre elles, caractérisé en ce qu'il comporte en outre, pour maintenir une pression constante dans la chambre de pression (7) pour toutes les positions angulaires déterminées d'indices 1 à N, un groupe de (N-1) secondes lumières (25A, 25B), aménagées dans la cloison de séparation (3), des moyens pour obturer toutes les secondes lumières (25A, 25B) dans la position angulaire d'indice J = N, et des moyens pour dégager seulement (N-J) des (N-1) secondes lumières (25A, 25B) lorsque le disque rotatif (16) est dans la position angulaire correspondante, d'indice J différent de N.

5. Distributeur rotatif selon la revendication 4, caractérisé en ce que les moyens pour obturer les secondes lumières (25A, 25B), aménagées dans la cloison de séparation (3), sont constitués par le disque rotatif (16) lui-même, et que les moyens pour les dégager sont formés en aménageant dans le disque (16), pour chacune des positions angulaires d'indice J différent de N, un groupe de (N-J) secondes lumières (26Ba et/ou 26Aa), convenablement disposées.

6. Distributeur rotatif selon l'une quelconque des revendications 4 et 5, caractérisé en ce qu'un manomètre lui est associé pour contrôler la pression dans la chambre de pression (7).

7. Distributeur rotatif selon l'une quelconque des revendications 4 à 6, caractérisé en ce qu'il comporte en outre des moyens (27) pour régler, de l'extérieur du distributeur, par exemple manuellement, simultanément les sections des secondes lumières (25A, 25B), de manière qu' elles soient toujours égales entre elles.

8. Distributeur rotatif selon la revendication 7, caractérisé en ce que les moyens de réglage des sections des secondes lumières comprennent un second obturateur (27), mobile dans la zone des secondes lumières (25A, 25B) de la cloison de séparation (3).

9. Distributeur rotatif selon l'une quelconque des revendications 3 et 8, caractérisé en ce que l'un au moins des premier et second obturateurs mobiles est une came (23 ou 27), montée de préférence contre la face du disque rotatif (16), opposée à la cloison de séparation (3), de manière à pouvoir pivoter autour d'un axe (A1 ou A2) perpendiculaire au disque (16), notamment sous l'action d'une transmission de mouvement, par exemple à pignon (23a) et vis sans fin (24b), commandée de l'extérieur du distributeur, en particulier au moyen d'un bouton rotatif (24 ou 24B).

10. Distributeur rotatif selon la revendication 9, caractérisé en ce que, dans le cas de N = 3 sections de rampe, la came (27) constituant le second obturateur mobile est montée pivotante autour d'un axe (A2) équidistant des deux secondes lumières (25A, 25B) de la cloison de séparation (3), et que son profil est symétrique par rapport à cet axe (A2).

11. Distributeur rotatif selon l'une quelconque des revendications 1 à 10, caractérisé en ce que des troisièmes lumières (28 et 29) sont aménagées dans la cloison de séparation (3) et le disque rotatif (16) de façon à coïncider pour toutes les positions angulaires du disque (16), intermédiaires entre ses positions déterminées.

12. Distributeur rotatif selon l'une quelconque des revendications 1 à 11, caractérisé en ce qu'un clapet de sécurité (30, 31, 33) est monté dans une partie (3c) de la cloison de séparation (3) qui n'est jamais masquée par le disque rotatif (16).

13. Distributeur rotatif selon l'une quelconque des revendications 1 à 12, caractérisé en ce qu'un faible intervalle (i) est aménagé entre le disque rotatif (16) et la cloison de séparation (3), et que chacune des lumières (22, 26, 29) du disque (16), ou bien, de préférence, chacune des lumières (21, 25, 28) de la cloison (3) est bordée, dans ledit intervalle (i), par une nervure continue d'étanchéité (35), qui vient en contact avec l'autre pièce (3 ou 16).

14. Distributeur rotatif selon la revendication 13, caractérisé en ce que chaque nervure d'étanchéité (35) est matérialisée par une chemise coulissant avec étanchéité dans la lumière correspondante de la pièce (16 ou 3) et appliquée élastiquement, par exemple par un ressort, sur l'autre pièce (3 ou 16).

15. Distributeur selon l'une quelconque des revendications 13 et 14, caractérisé en ce que l'intervalle (i) entre le disque rotatif (16) et la cloison de séparation (3) est en communication permanente (par j) avec la chambre de pression (7).

16. Distributeur selon l'une quelconque des revendications 13 et 14, caractérisé en ce que l'intervalle (i) entre le disque rotatif (16) et la cloison de séparation (3) est mis en communication temporaire avec la chambre de pression (7) seulement pour toutes les positions angulaires du disque (16), intermédiaires entre ses positions déterminées.

17. Distributeur selon la revendication 16, caractérisé en ce que le moyeu (38) du disque rotatif (16) et un axe
d'entraînement (12) qui le traverse ou une pièce (39) solidaire de cet axe (12) sont aménagés avec un degré limité de liberté en rotation relative, entre une position
d'entraînement positif du moyeu (38) par l'axe (12), où
des lumières coïncidentes (38b, 39c) des deux pièces(38,
39) établissent la communication temporaire entre l'intervalle (i) et la chambre de pression (7), et une position
initiale, vers laquelle les deux pièces (38, 39) sont ramenées élastiquement (par 40), et où la communication temporaire est coupée.

18. Distributeur rotatif selon la revendication 1, caractérisé en ce qu'un clapet à bille et à ressort (52, 53)
est aménagé dans la chambre de pression (7) de manière à
obturer la première lumière de retour (21) dans l'une au
moins des positions angulaires déterminées du disque rotatif (16), ledit clapet (52, 53) étant ouvert, dans toutes
les autres positions déterminées du disque rotatif (16),
par des secondes cames (17B), solidaires en rotation du
disque (16).

19. Distributeur rotatif selon la revendication 18, caractérisé en ce que les moyens de réglage (23) de la section
de la première lumière de retour (21) forment avec elle un
robinet à pointeau qui peut être manoeuvré manuellement,
de l'extérieur du distributeur.

20. Distributeur rotatif selon la revendication 19, caractérisé en ce que la première lumière (21) comporte deux
sièges, l'un dans la chambre de pression (7) pour coopérer
avec la bille (52) du clapet, et l'autre siège, dans la
chambre de retour (8) pour coopérer avec le pointeau (23)
du robinet.

21. Distributeur rotatif selon l'une quelconque des revendications 18 à 20, caractérisé en ce qu'un manchon tubulaire (45), fixé coaxialement au pourtour du disque rotatif (16) porte extérieurement, par exemple près de ses deux extrémités (45a, 45b), une rangée annulaire de premières cames (17A) pour commander les clapets (10b...10d) contrôlant les tubulures de raccordement (9b...9d) avec les différentes sections de rampe, et une rangée annulaire de secondes cames (17B) pour ouvrir le clapet (52,53) contrôlant la première lumière de retour (21), ces deux rangées de cames (17A, 17B) étant décalées axialement sur la surface extérieure cylindrique dudit manchon tubulaire (45).

22. Distributeur rotatif selon la revendication 4, caractérisé en ce que les moyens pour obturer ou dégager les secondes lumières (25A, 25B) aménagées dans la cloison de séparation (3), selon que le disque rotatif (16) se trouve dans l'une ou l'autre de ses positions angulaires déterminées, sont constitués par des clapets à ressort (55A, 55B), dont lesdites secondes lumières (25A, 25B) forment les sièges respectifs, et qui sont commandés par des cames (17C), solidaires en rotation du disque (16).

23. Distributeur rotatif selon les revendications 21 et 22, caractérisé en ce que les cames (17C) de commande des clapets (55A, 55B) contrôlant les secondes lumières (25A, 25B), sont disposées sur le manchon tubulaire (45) suivant une troisième rangée annulaire, par exemple à l'intérieur dudit manchon (45), près de son extrémité (45b) qui porte extérieurement la rangée de secondes cames (17B).

24. Distributeur rotatif selon la revendication 7, caractérisé en ce que les moyens (27A, 27B) de réglage des sections des secondes lumières (25A, 25B) forment avec elles des robinets à pointeau, qui peuvent être manoeuvrés manuellement de l'extérieur du distributeur, de préférence au moyen d'un bouton rotatif unique (24), accouplé par des engrenages (24a, 57A, 57B) avec les tiges (27A, 27B) des différents robinets.

25. Distributeur rotatif selon l'une quelconque des revendications 18 à 24, caractérisé en ce qu'un second clapet de retour à ressort de fermeture (61, 61a) est aménagé pour contrôler une communication (60) entre la chambre de pression (7) et la chambre de retour (8), et que des cames (17D), solidaires en rotation du disque (16), sont disposées de façon à ouvrir ledit second clapet de retour (61, 61a) dans toutes les positions angulaires du disque (16), intermédiaires entre ses positions déterminées.

26. Distributeur rotatif selon la revendication 25, caractérisé en ce que les premières cames (17A) commandant les clapets (10b ... 10d) de raccordement de la chambre de pression (7) avec les différentes sections de rampe, et les cames (17D) commandant le second clapet de retour (61, 61a), sont dimensionnées et disposées les unes par rapport aux autres, de manière que ledit second clapet de retour (61, 61a) ne soit refermé qu'un bref instant après l'ouverture de l'un quelconque des clapets de raccordement (10b ... 10d) avec les différentes sections de rampe.

27. Distributeur rotatif selon l'une quelconque des revendications 25 et 26, caractérisé en ce que les cames de commande (17D) du second clapet de retour (61, 61a), sont disposées sur le manchon tubulaire (45) suivant une quatrième rangée annulaire, s'étendant par exemple axialement au-delà de son extrémité (45b) qui porte les seconde et troisième rangées annulaires de cames (17B et 17C).

28. Distributeur rotatif selon l'une quelconque des revendications 25 à 27, caractérisé en ce que le second clapet de retour (61, 61a) est un clapet à membrane (62).

29. Distributeur rotatif selon la revendication 28, caractérisé en ce que la membrane (62) du second clapet de retour (61, 61a) est disposée avec une première face exposée à la pression régnant dans la chambre de pression (7) et une seconde face exposée à la pression régnant dans une chambre de commande (59), interposée dans un circuit qui débouche, à une extrémité, dans ladite chambre de pression (7), par un premier ajutage (63a), et, à son autre extrémité, dans la chambre de retour (8), par un second ajutage (64a), dont la section est supérieure à celle du premier, et qui est contrôlé par un pointeau (66), par exemple un pointeau-culbuteur, normalement fermé par un ressort (67) et pouvant être ouvert, par exemple par un poussoir (68), actionné par les cames de commande (17D) dudit second clapet de retour, de façon à créer à chaque fois, dans ladite chambre de commande (59), une dépression, qui produit l'ouverture automatique dudit second clapet de retour (61, 61a) par l'intermédiaire de sa membrane (62).

30. Distributeur rotatif selon la revendication 29, caractérisé en ce que le corps (61) du second clapet de retour, auquel le bord interne de la membrane annulaire (62) est assujetti de façon étanche, forme avec ladite membrane (62), encastrée par son bord externe, une cloison mobile entre la chambre de commande (59) et la chambre de pression (7), dans laquelle débouche une extrémité, formant un siège pour ledit corps de clapet (61), d'un conduit tubulaire (60), dont l'autre extrémité débouche dans la chambre de retour (8), un ressort (61a) étant disposé dans ladite chambre de commande (59) pour appliquer le corps du clapet (61) contre son siège lorsque la même pression est appliquée sur les deux faces de la membrane (62).

31. Distributeur rotatif selon l'une quelconque des revendications 29 et 30, caractérisé en ce que le ressort (67) de fermeture du pointeau (66) est taré pour permettre l'ouverture automatique du clapet de retour (61, 61a) lorsque la pression régnant dans la chambre de pression (7) dépasse une valeur déterminée, de par exemple 15 bars.

1 _9

FIG.:1

24B

1

19a

24

12

2d

2a

2b

2c

FIG.:4

9b₁

9c₁

9d₁

5

28a

28i

28h

25A

35

21

28b

25B

28g

j

35

3

9a

VIII

28c

28f

28d

28e

34

VIII

0079815

FIG.: 3

FIG.: 2

FIG.:5

FIG.:6

FIG.:7

FIG.: 8

0079815

4 - 9

FIG.: 9

FIG.: 10

FIG.: 11

FIG.: 12

FIG.: 13

0079815

FIG.:14

FIG.:16

FIG.:17

FIG.: 15

2d

8-9

9b

9a

9'b

2a

9'c

41

9c

42

1b

1a

9'd

9d

2c

2b

FIG.: 19

47b

25B

XX

47c

25A

XX

3b

47d

21'

FIG.:18

5  8  66  66a  67  3  64a  68  17D  45  45b  4  1c  Z  64

FIG.:20

24  24a

FIG.:21

17A